# EUROPEAN PATENT APPLICATION

(11) **EP 1 677 101 A1**
(43) Date of publication of application: **05.07.2006**
(21) Application number: 05026155.1
(22) Date of filing: 30.11.2005
(51) Int. Cl.: G01N 27/12, G01N 27/407

(54) **Sensor comprising bent connecting leads between a suspended sensing element and connecting pins located on a substrate**

(30) Priority: 28.12.2004 JP 2004381176; 28.09.2005 JP 2005282798
(71) Applicant: TDK Corporation, Tokyo 103-8272 (JP)
(72) Inventor: Ono, Shizuko, Tokyo 103-8272 (JP)
(74) Representative: Grünecker, Kinkeldey, Stockmair & Schwanhäusser Anwaltssozietät

(57) **Abstract**

The sensor comprises a base, a plurality of pins fixed to the base, a sensor element, and a plurality of leads connecting the sensor element to the plurality of the pins. The sensor element is supported by the plurality of the pins via the plurality of the leads. Each of the plurality of the leads is provided along a straight line extending between a connected pin, out of the plurality of the pins, and the sensor element, and is bent plural times between the connected pin and the sensor element in order to prevent stress in the sensing element.

## Description

### BACKGROUND OF THE INVENTION

### Field of the Invention

The present invention relates to a sensor having a sensor element, and, for example, to a sensor having a gas sensor element for detecting a specific gas.

### Related Background of the Invention

Generally, in various sensors such as an optical sensor, a magnetic sensor, a temperature sensor, and an acoustic sensor, a sensor element is arranged so as to be independent of a housing. The reason is that the sensor element is adapted not to receive an influence (optical reflection, magnetic field, heat, vibration, etc.) from a housing of the sensor element.

As the sensor of this type, there exists a gas sensor for detecting concentration of a specific gas in an atmospheric gas. As for the gas sensor, a gas sensor is conventionally known in general that includes a gas sensor element for detecting a specific gas and has a structure in which this gas sensor element is connected to each of a plurality of stem pins fixed to a base via a plurality of leads. In such a gas sensor, each of the lead, which is formed in a linear shape, connects the gas sensor element to each of the stem pins, and the gas sensor element is supported in a suspension state via this one group of the leads. For example, this structure is disclosed in Figure 1 and 6 of Japanese Patent Application Laid-open H9-68512.

### SUMMARY OF THE INVENTION

Incidentally, in the conventional various sensors such as the foregoing gas sensor, one group of the leads are formed in a linear shape. Therefore, in a manufacturing procedure, when a load (weight) for grasping the lead acts upon a base end of the lead at the time of connecting the tip of each lead to each stem pin after connecting the base end of each lead to the sensor element, the base end of the lead is broken and the disconnection of the base end occurs in some cases.

Furthermore, for example, in the gas sensor, when a heater attached to the gas sensor element generates heat in a state where the gas sensor is in use, each lead becomes loose due to thermal expansion.
In this state, when an impact is applied to the gas sensor from the external, the gas sensor element vibrates severely, and a vibration weight is applied to the base end of each lead. As a result, the base end of each lead is broken and the disconnection of the base end occurs in some cases.

In addition to the foregoing structural problem, there exists a problem that an external electromagnetic wave intrudes into the sensor element through each lead, thereby causing a thermal control and a detection precision of the sensor to deteriorate.

The present invention has an object of providing a sensor which is enabled to prevent in advance the disconnection of the leads in a manufacturing procedure and in a state where it is in use, and can be used at a high precision.

The sensor according to the present invention includes a base, a plurality of pins, a sensor element, and a plurality of leads. The pins are fixed to the base. The leads connect the sensor element to the pins respectively. Each lead lies along a straight line extending between the connected pin out of the plurality of the pins and the sensor element, and is bent plural times between the connected pin and the sensor element.

In the sensor of the present invention, when load (weight) or vibration acts upon each lead connecting the sensor element to the pin, each lead expands/contracts due to its elasticity between the pin and the sensor element, thereby absorbing the load (weight) or the vibration. Therefore, the disconnection of each lead is prevented in advance. In particular, in this sensor, each lead primarily expands/contracts in the direction of the straight line extending between the sensor element and the connected pin, whereby a stress that occurs at the end portions of each lead connected to the pin and the sensor element is small

Moreover, the sensor of the present invention enables intrusion of electromagnetic noise to be reduced because the lead is bent plural times. For example, in a gas sensor, there are many cases where the temperature is controlled by causing the current to flow from one lead to the heater, and simultaneously therewith a change in the electric potential or resistance of the sensor is detected through the other lead. In this case, the direct current is employed for the sensor, and the control of the heater and the detection of a change in the electric potential or the resistance of the sensor tend to become unstable when the electromagnetic noise having a certain frequency is superimposed upon this direct current. Most of such kinds of the electromagnetic noise often intrude into the sensor through each lead.

On the other hand, in the present invention, each lead has an inductance because it is bent plural times. That is, intrusion of the noise into the sensor can be suppressed because each lead has the impedance against the electromagnetic noise of which frequency is higher than that of direct current This enables the high precision thermal control and the exact detection of a change in the electric potential or the resistance, or the like.

Preferably, in the sensor according to the present invention, each of the plurality of the leads includes the periodically bent portion. That is, it is preferred in the sensor of the present invention that each lead has a sequentially and periodically bent portion. Each lead may be characterized in having the bent portion in at least one part thereof, for example, the bent portion having a corrugated shape that is sequentially and periodically curved, a saw-tooth shape that is sequentially and periodically bent, or a coil shape.

The so-called "periodically" in the present invention is not restricted to the case where the bent portion is configured of bends having the identical curvature or the identical angle, but may be applied to the case where the bent portion is configured of the bends having the different curvature or the different angle in a range from one side of the bent portion to the other side. For example, in a case where the bent portion is formed in coil-shape, the bent portion may be configured of the shape similar to the so-called involute curved line in which the curvature changes in a range from one side of the coil shaped portion to the other side. Moreover, the period of the bent portion may be one period. For example, the bent portion of each leads may be formed in coil-shape of one period.

Preferably, in the sensor of the present invention, the end portion of each lead has a stopper structure. For this structure, the width of the end portion of each of the plurality of the leads, which is a width in a direction intersecting with a direction in which the above-mentioned straight line extends, may be larger than the thickness of a constituting member of the above lead, e.g. the thickness of the wire constituting the lead. Specifically, in the sensor of the present invention, the end portion of each lead may be bent or squashed, and alternatively may be provided with a spherical body.

The end portion of each lead configured as mentioned above does not falls off the connected portion unintentionally, and a connecting strength of the end portion of each lead is improved. Moreover, an electric resistance value in the connected portion is reduced.

Moreover, the stopper structure may be configured as follows. That is, the sensor element is provided with a plurality of through-holes, and the end portion of each of the plurality of the leads may pass through the corresponding through-hole. Allowing the end portion of each lead to pass through the through-hole in such a manner causes the bonding strength of each lead to the sensor element to be improved.

Moreover, preferably, the end portion of each of the plurality of the leads passes through the corresponding through-hole so that its tip protrudes in a side of one surface of the sensor element, and the end portion faces the above one surface. Such a configuration allows the bonding strength of each lead to the sensor element to be further improved. Additionally, the end portion of each lead may be bonded to the one surface of the sensor element by means of a bonding member such as paste or solder, or may be pressure-bonded to the one surface. In addition, in order to cause the end portion of each lead to face the one surface of the sensor element, the tip portion of the end portion may be of split pin type, and alternately, may be deformed into a spherical body etc. by means of heat etc.

Moreover, in the sensor of the present invention, the sensor element may have one surface and the other surface, the end portion of each of the plurality of the leads may have a first surface facing one surface of the sensor element and a second surface facing the other surface of the sensor element, and the sensor element may be put between the first surface and the second surface. Also in this configuration, the end portion of each lead is bonded to the sensor element by means of the paste or the solder, or, may be pressure-bonded to the sensor element.

It is preferred in the sensor of the present invention that the material of each of the plurality of the leads is a material having impedance lower than that of the sensor element. Although each lead has the bent portion, making each lead from such a material allows the electric resistance value to be further reduced at the time of causing the current to flow. As such a material, it is preferred that the lead is made from the precious metals such as gold (Au) and platinum (Pt), or of the precious metal alloy including these.

### BRIEF DESCRIPTION OF THE DRAWINGS

Fig. 1 is a side-view illustrating a schematic structure of the gas sensor according to one embodiment of the present invention.

Fig. 2 is a plan view of the gas sensor shown in Fig. 1.

Fig. 3 is an enlarged sectional view of the gas sensor element shown in Fig. 1.

Fig. 4 is an enlarged plan view of the lead shown in Fig. 2.

Fig. 5 is a plan view illustrating a first modification example of the lead shown in Fig. 4.

Fig. 6 is a plan view illustrating a second modification example of the lead shown in Fig. 4.

Fig. 7 is a plan view illustrating a third modification example of the lead shown in Fig. 4.

Fig. 8 is a plan view illustrating a fourth modification example of the lead shown in Fig. 4.

Fig. 9 is a plan view illustrating a fifth modification example of the lead shown in Fig. 4.

Fig. 10 is a plan view illustrating a sixth modification example of the lead shown in Fig. 4.

Fig. 11 is a plan view illustrating a seventh modification example of the lead shown in Fig. 4.

Fig. 12 is a perspective view illustrating an eighth modification example of the lead shown in Fig. 4.

Fig. 13 is a plan view illustrating a ninth modification example of the lead shown in Fig. 4.

Fig. 14 is a plan view illustrating a tenth modification example of the lead shown in Fig. 4.

Fig. 15 is a sectional view illustrating a structure of the end portion of the lead according to a modification example.

Fig. 16 is a sectional view illustrating a structure of the end portion of the lead according to a modification example.

Fig. 17 is a sectional view illustrating a structure of the end portion of the lead according to a modification example.

Fig. 18 is a sectional view illustrating a structure of the end portion of the lead according to a modification example.

Fig. 19 is a sectional view illustrating a structure of the end portion of the lead according to a modification example.

Fig. 20 is a sectional view illustrating a structure of the end portion of the lead according to a modification example.

Fig. 21 is a side-view illustrating a structure of the end portion of the lead according to a modification example.

Fig. 22 is a side-view illustrating a structure of the end portion of the lead according to a modification example.

Fig. 23 is a side-view illustrating a structure of the end portion of the lead according to a modification example.

Fig. 24 is a side-view illustrating a structure of the end portion of the lead according to a modification example.

Fig. 25 is a side-view illustrating a schematic structure of the gas sensor according to a modification example.

Fig. 26 is a side-view illustrating a schematic structure of the gas sensor according to a modification example.

### DESCRIPTION OF THE PREFERRED EMBODIMENTS

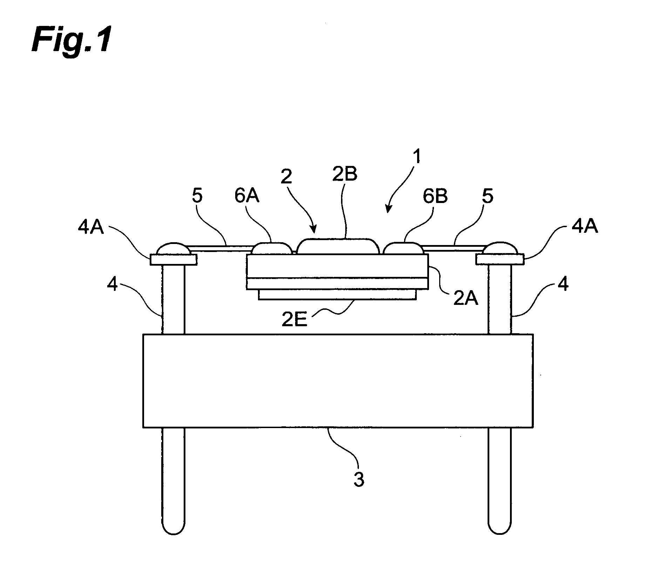

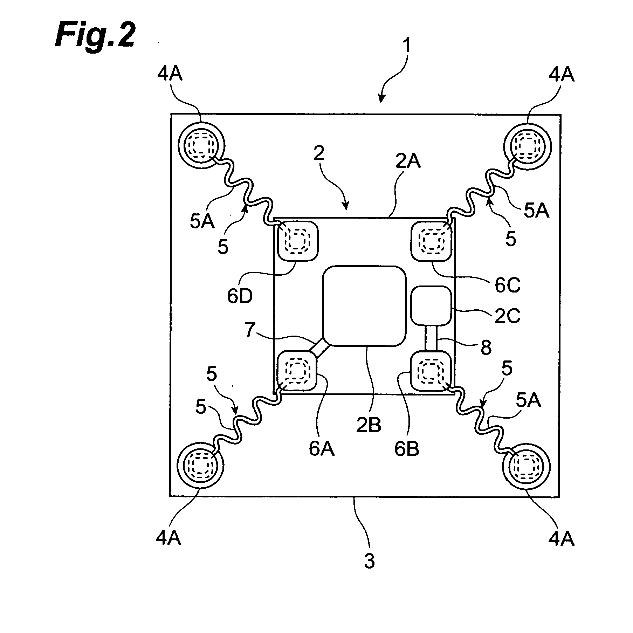

Hereinafter, embodiments in which the gas sensor, out of the sensors according to the present invention, is exemplified will be explained by making a reference to the accompanied drawings. In the figures to which a reference is made, Fig. 1 is a side-view illustrating a schematic structure of the gas sensor according to one embodiment, and Fig. 2 is a plan view of the gas sensor shown in Fig. 1.

A gas sensor 1 of one embodiment shown in Fig. 1 and Fig. 2 is a gas sensor for detecting the concentration of, for example, carbon dioxide (CO2) as a specific gas in the atmospheric gas. The gas sensor 1 comprises a gas sensor element 2 for detecting carbon dioxide (CO2). This gas sensor element 2 is connected to four stem pins 4 via four leads 5 respectively. The stem pins 4 are fastened in the vicinity of four corners of a base plate 3 in a penetration state. The gas sensor element 2 is supported in a suspension state by each of stem pins 4 via each of the leads 5.

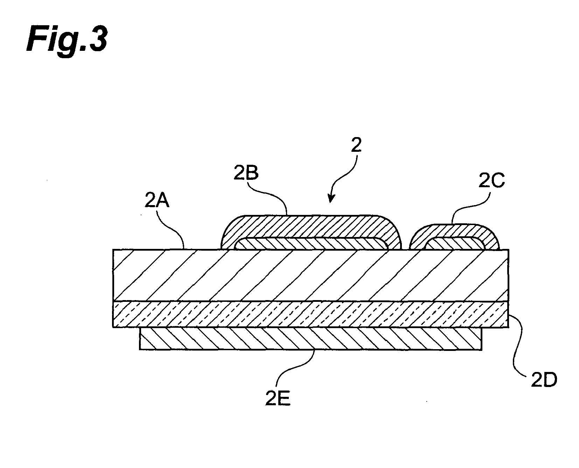

As shown in Fig. 3, the gas sensor element 2 is configured as a single-surface type element having a sensing electrode 2B and a reference electrode 2C formed on the surface of a solid-state electrolytic substrate 2A such as, for example, NASICON (compound oxide of Na, Si, Zr, and P). An insulating basic layer 2D by insulating paste is formed on the back surface of this solid-state electrolytic substrate 2A. On this insulating basic layer 2D is formed a heater 2E for heating the solid-state electrolytic substrate 2A to a temperature (for example, 350°C or more) suitable for ion conduction.

As shown in Fig. 2, the sensing electrode 2B is arranged in the center of the approximately square-shaped solid-state electrolytic substrate 2A, and the reference electrode 2C is arranged by the side of this sensing electrode 2B. This sensing electrode 2B has a structure in which a sensing layer is laminated upon a current collection layer, and the reference electrode 2C has a structure in which a reference layer is coated with a protection layer.

In the vicinity of the four corners on the surface of the solid-state electrolytic substrate 2A are formed electrode pads 6A to 6D, respectively, which are composed of a gold alloy such as, for example, Au-Pt, Au-Rh, and Au-Pd. The electrode pad 6A is electrically connected to the sensing electrode 2B via a conductive band 7, and the electrode 6B is electrically connected to the reference electrode 2C via a conductive band 8. In addition, each of the electrode pads 6C and 6D is connected to the heater 2E (see Fig. 3) via through-holes, which is not shown in the figure, formed in the solid-state electrolytic substrate 2A.

One end portions of the leads 5 are bonded to the electrode pads 6A to 6D respectively with an appropriate means such as parallel gap welding or baking using a metal paste, and the other end portions of the leads 5 are bonded to heads 4A of the stem pins 4 with the similar bonding means respectively.

The material having impedance lower than that of the gas sensor element 2 is employed for a material of each of the leads 5 so as to suppress an increase in the electric resistance value at the time of causing the current to flow. Specifically, the material of each of the leads 5 is a precious metal having a low electric resistance value such as gold (Au) or platinum (Pt), or a precious metal alloy including these. As this precious metal alloy are listed as Pt-W, Pt-Cr, Pt-Fe, Pt-Ni, Pt-Rh, Au-Pt, Au-Rh, Au-Pd, Au-Pd-Mo, RuO2, etc.

The diameter of each lead is appropriately set within a range of, for example, 10 to 100 µm in consideration of balance between the mechanical strength and the electric resistance value.

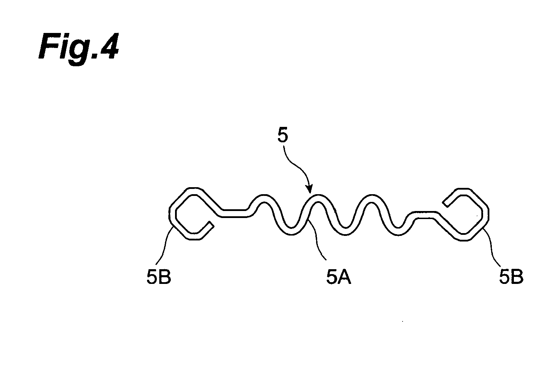

As enlarged in Fig. 4, each of the leads 5 is provided along a straight line extending between the connected stem pin 4 and the connected electrode pad of the gas sensor element 2. Moreover, each of the leads 5 has a portion (bent portion) 5A which is bent plural times between the connected stem pin 4 and the gas sensor element 2. In this embodiment, the bent portion 5A is configured as a bent portion which has a sequential and periodical curve. Specifically, the bent portion 5A is formed in a sequentially curved corrugated-shape.

Moreover, both end portions 5B and 5B of each of the leads 5 are provided with a stopper structure for preventing the connection from falling off. The both end portions 5B and 5B are formed in an approximately square bent shape. That is, the width of each of the end portions 5B, which is a width in a direction intersecting with a direction in which the above-mentioned straight line extends, is larger than the thickness of the constituting member of the lead 5, i.e. the thickness of the wire constituting the lead 5. This allows each end portion 5B of each lead 5 to function as the stopper structure for preventing the falling-off.

In the gas sensor 1 of one embodiment having the structure as mentioned above, in its manufacturing procedure, the end portions 5B on the base end sides of leads 5 are bonded to the electrode pads 6A to 6D of the gas sensor element 2 respectively with an appropriate means such as the parallel gap welding or the baking using the metal paste, and then the end portions 5B on the tip sides of leads 5 are connected to the heads 4A of the stem pins 4 with the similar bonding means, respectively.

In this moment, although the load (weight) for grasping the lead 5 acts upon the lead 5, in the gas sensor 1 of one embodiment, the bent portion 5A of the lead 5 expands/contracts due to its elasticity and absorbs the load (weight). Therefore, there is no possibility that the end portion 5B on the base end side of the lead 5 on the side of the electrode pads 6A to 6D is broken, and the disconnection of the end portion 5B on the base side of the lead 5 is prevented in advance.

In addition, the end portion 5B on the base end side of each lead 5 is provided with the stopper structure configured by bending the wire constituting the lead 5 in approximately square-shape. Therefore, the connecting strength of bonding to the electrode pads 6A to 6D is enhanced, thereby also preventing the end portions 5B on the base end sides of leads 5 in advance from falling off the electrode pads 6A to 6D unintentionally and from being disconnected.

In a state where the gas sensor 1 of one embodiment is in use, each lead 5 is thermally expanded due to heating of the heater 2E of the gas sensor element 2. However this thermal expansion is absorbed owing to the expansion of the bent portion 5A of the lead 5. Moreover, at the time that the impact is applied to the gas sensor 1 from the external and the gas sensor element 2 vibrates severely, the bent portion 5A of each lead 5 absorbs the vibration by elastic deformation.

Additionally, according to the lead 5, the direction of the main deformation of the bent portion 5A is a direction in which the straight line extending between the stem pin 4 and the electrode pad of the gas sensor element 2 extends. Accordingly, a large force, which is oriented in the direction intersecting with the above-mentioned straight line, e.g. in the direction for causing the gas sensor element 2 to rotate, does not act upon the end portion 5B on the base end side of the lead 5. Therefore, the disconnection of the end portion 5B on the base end side of the lead 5 is effectively prevented.

In such a manner, according to the gas sensor 1 of one embodiment, the end portions 5B of leads 5 on the side of the electrode pads 6A to 6D can be prevented in advance from being broken, or from falling off the electrode pads 6A to 6D and being disconnected. Similarly, the end portions 5B of leads 5 on the side of the stem pins 4 can be prevented in advance from being broken, or from falling off the heads 4A of stem pins 4 and being disconnected.

In addition, the material of each lead 5 is a precious metal such as gold (Au) or platinum (Pt) or these precious metal alloy having a low electric resistance value. Therefore, in a state where the gas sensor 1 of one embodiment is in use, an increase in the electric resistance value of each lead 5 can be sufficiently suppressed at the time of causing the current to flow through each lead 5 notwithstanding existence of the bent portion 5A. Accordingly, there is no possibility that the bent portion 5A lowers the function of the gas sensor 1 substantially.

Moreover, in a state where the gas sensor 1 of one embodiment is in use, the inductance is generated in the bent portion 5A of each lead 5 due to its shape. As a result, the impedance for high frequency components is generated in each lead 5, whereby intrusion of the external electromagnetic wave can be prevented.

That is, the foregoing material of each lead 5 enables suppression of the resistance value sufficiently because the component of the current for the heat control and the detection that is caused to flow through the lead 5 is a direct current. For this reason, the impedance originating in the shape of the bent portion 5A has an influence only upon the high frequency component included in the electromagnetic wave noise which intrudes from the external. This enables superposition of the electromagnetic wave noise upon the direct current component to be suppressed and the precision of the gas sensor 1 to be further enhanced.

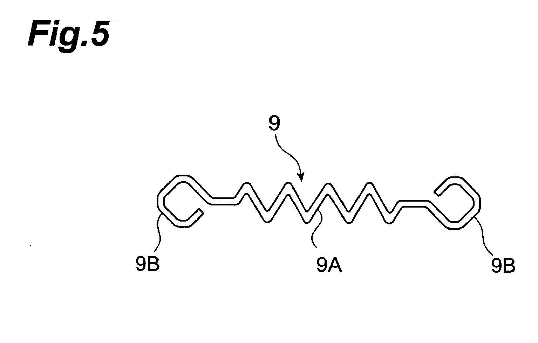

The gas sensor as the sensor according to the present invention is not limited to that of the foregoing one embodiment. For example, each lead 5 shown in Fig. 4 is changeable into a lead having the shape and structure as shown in Fig. 5 to Fig. 14.

A lead 9 shown in Fig. 5 has a bent portion 9A which is bent sequentially in a saw-tooth shape between both end portions 9B. The both end portions 9B have the stopper structure similar to that of the both end portions 5B of the lead 5 shown in Fig. 4. This lead 9 also exhibits an operational effect similar to the lead 5.

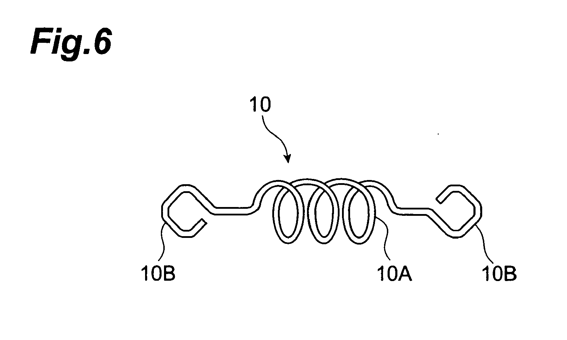

A lead 10 shown in Fig. 6 has a bent portion 10A, which is sequentially curved in a coil shape, between both end portioned 10B. The both end portions 10B have the stopper structure similar to that of the both end portions 5B of the lead 5 shown in Fig. 4. This lead 10 also exhibits an operational effect similar to the lead 5.

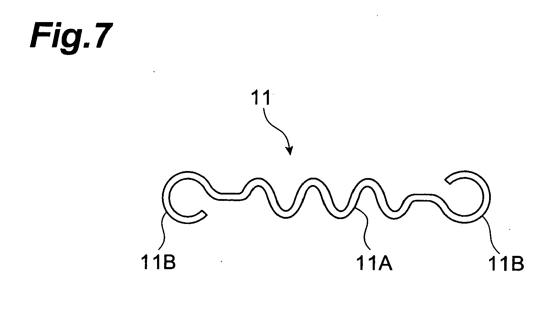

A lead 11 shown in Fig. 7 has a bent portion 11A similar to the bent portion 5A of the lead 5 shown in Fig. 4 between both end portions 11B. The both end portions 11B have a hook-shaped stopper structure. That is, the both end portions 11B are configured along a curved line like an arc. This lead 11 also exhibits an operational effect similar to the lead 5.

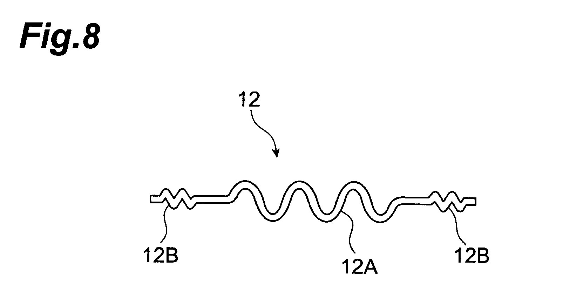

A lead 12 shown in Fig. 8 has a bent portion 12A similar to the bent portion 5A of the lead 5 shown in Fig. 4 between both end portions 12B. The both end portions 12B have the saw-tooth shaped stopper structure. That is, the both end portions 12B are configured along a curved line bent in a saw-tooth shape. This lead 12 also exhibits an operational effect similar to the lead 5.

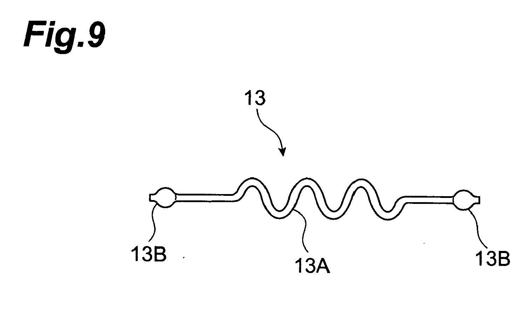

A lead 13 shown in Fig. 9 has a bent portion 13A similar to the bent portion 5A of the lead 5 shown in Fig. 4 between both end portions 13B. The both end portions 13B have the stopper structure having an approximately round flat-shape. Such both end portions 13B can be formed, for example, by squashing the both end portions of the lead 13. This lead 13 also exhibits an operational effect similar to the lead 5.

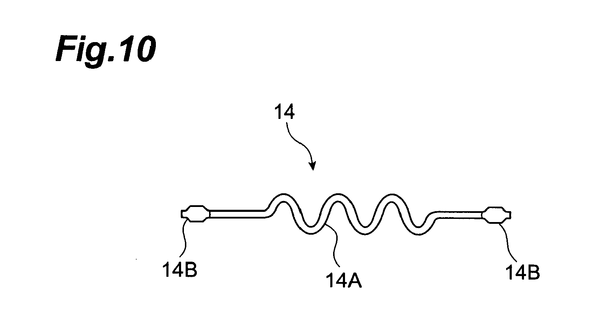

A lead 14 shown in Fig. 10 has a bent portion 14A similar to the bent portion 5A of the lead 5 shown in Fig. 4 between both end portions 14B. The both end portions 14B have the stopper structure having a rectangular flat-shape. Such both end portions 14B can be formed, for example, by squashing the both end portions of the lead 14. This lead 14 also exhibits an operational effect similar to the lead 5.

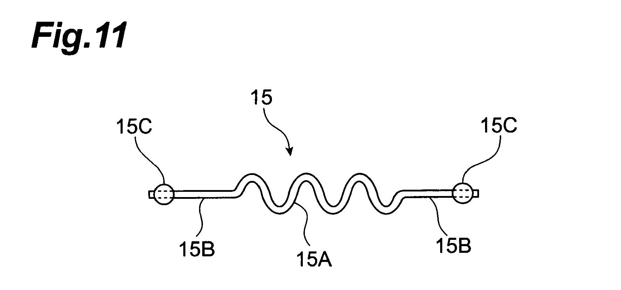

A lead 15 shown in Fig. 11 has a bent potion 15A similar to the bent portion 5A of the lead 5 shown in Fig. 4 between both end portions. The both end portions of the lead 15 are provided with straight portions 15B and 15 B extending along a straight line. Spherical bodies 15C and 15C are mounted to these straight portions 15B and 15 B respectively, as a stopper structure. The spherical body 15C, which has a through-hole, fits into the straight portion 15B which passes through the above through-hole. The spherical body 15C is fixed to the straight portion 15B with an appropriate bonding means. Additionally, these spherical bodies 15C and 15C may be configured by melting the both ends of the straight portions 15B and 15B to sphere them by surface tension.

In this lead 15, the straight portions 15B and 15 B inside the spherical bodies 15C and 15C are bonded to the electrode pads 6A to 6D and the heads 4A of the stem pins 4 respectively, and this lead 15 also exhibits an operational effect similar to the lead 5.

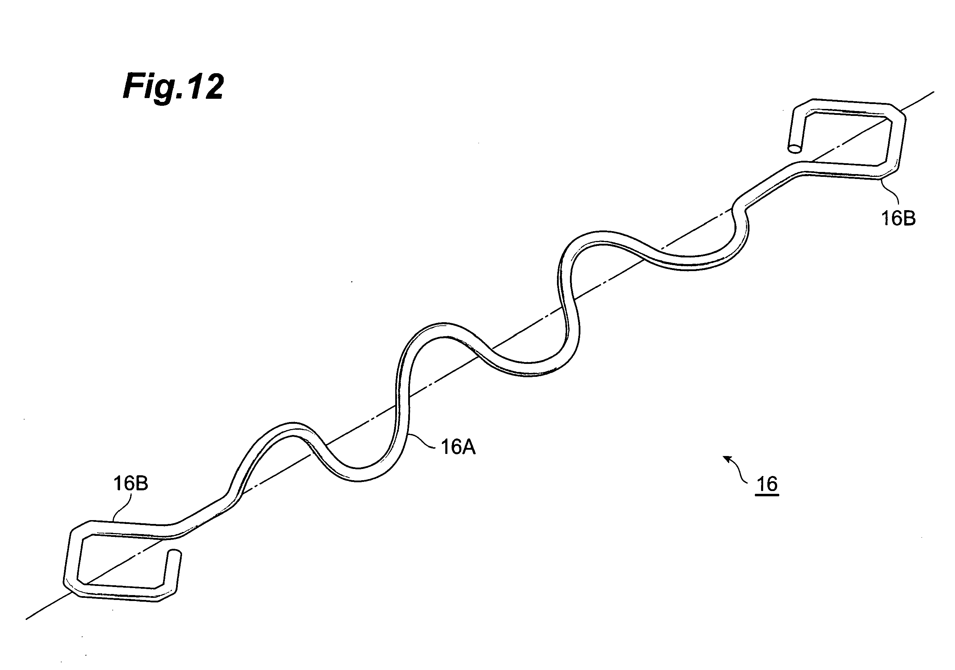

A lead 16 shown in Fig. 12 has both end portions 16B similar to the both end potions 5B shown in Fig. 4. The lead 16 has a bent portion 16A between the both end portions 16B. This bent portion 16A is configured along a wave-shaped curved-line in which the bending direction gradually changes between one end and the other end. In this one example, as for the bent portion 16A, the bending direction thereof changes 90 degree between one end and the other end.

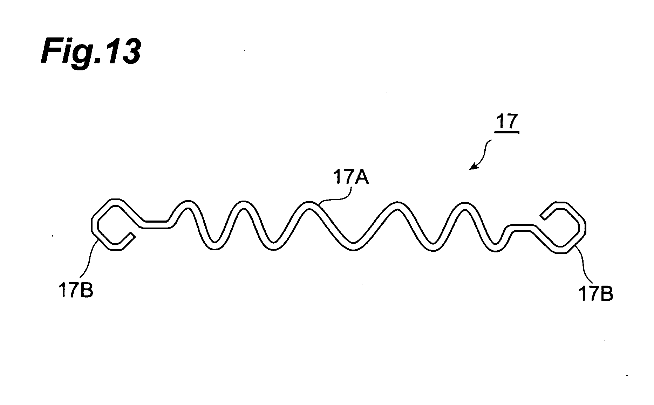

A lead 17 shown in Fig. 13 has both end portions 17B similar to the both end portions 5B shown in Fig. 4. The lead 17 has a bent portion 17A between the both end portions 17B. This bent portion 17A is configured along a wave-shaped curved-line in which a periodic length becomes small towards one end from the center and towards the other end from the center.

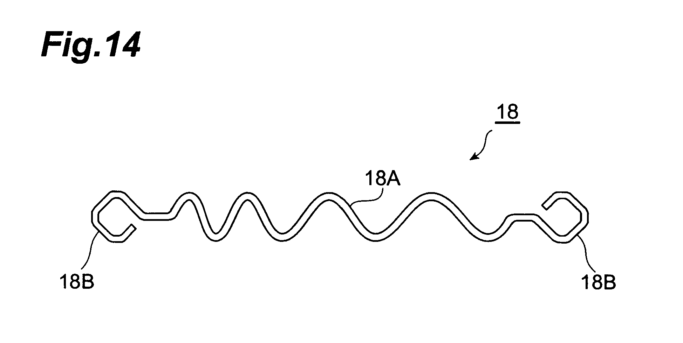

A lead 18 shown in Fig. 14 has both end portions 18B similar to the both end portions 5B shown in Fig. 4. The lead 18 has a bent portion 18A between the both end portions 18B. This bent portion 18A is configured along a wave-shaped curved-line in which a period becomes large gradually from one end towards the other end.

As explained above, the bent portion in the lead can have an arbitrary shape as long as it is provided along a curved line bent plural times and extends along a straight line connecting the gas sensor element and the stem pin.

Moreover, the both end portions in the lead are enabled to have an arbitrary shape as long as they have the stopper structure for preventing the disconnection. For example, as is the case with the foregoing both end portions of the lead, the structure in which the width of the end portion of the lead, which is a width in a direction crossing the direction in which the straight line connecting the gas sensor element and the stem pin extends, is adapted to become larger than the thickness of the member constituting the lead, allows the stopper structure to be realized.

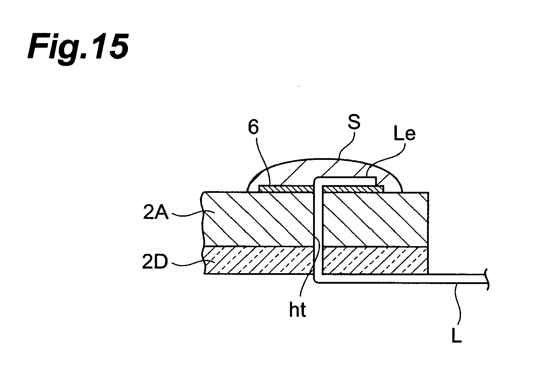

The end portion of the lead on the gas sensor element side may have the structure shown in Fig. 15 to Fig. 22. It should be noted that, in the following explanation, the electrode pads 6A to 6D are generically referred to as an electrode pad 6. In the sensors shown in Fig. 15 to Fig. 19, the gas sensor element is provided with a thorough-hole ht, and an end portion Le of a lead L on the gas sensor element side passes through the thorough-hole ht. The end portion Le passes through the through-hole ht so that its tip protrudes on the side of one surface of the gas sensor element.

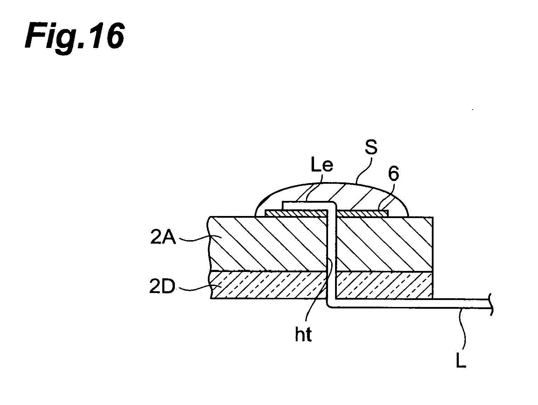

As shown in Fig. 15, the end portion Le may be bent so as to face one surface of the gas sensor element. In an example shown in Fig. 15, the end portion Le lies along the electrode pad 6 provided on one surface of the gas sensor element. The end portion Le may be bonded to the electrode pad 6 with a bonding member S such as solder or paste as shown in Fig. 15, or may be pressure-bonded to the electrode pad 6 without the bonding member S. Additionally, as shown in Fig. 16, the direction in which the end portion Le is bent may differ from the direction shown in Fig. 15. The end portion Le may be bonded to the electrode pad 6 with a bonding member S as shown in Fig. 16, or may be pressure-bonded to the electrode pad 6 without the bonding member S.

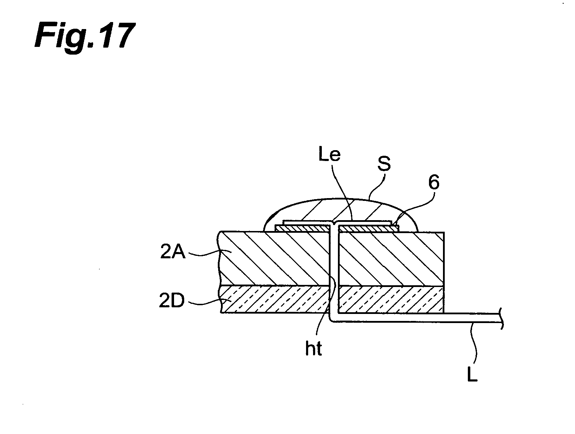

The tip of the end portion Le, as shown in Fig. 17, may be of split pin type. In this configuration, the tip of the end portion Le is opened and bent so as to face one surface of the gas sensor element. The end portion Le is bonded to the electrode pad 6. The end portion Le, as shown in Fig. 17, may be bonded to the electrode pad 6 with the bonding member S, and alternately, may be pressure-bonded to the electrode pad 6 without the bonding member S.

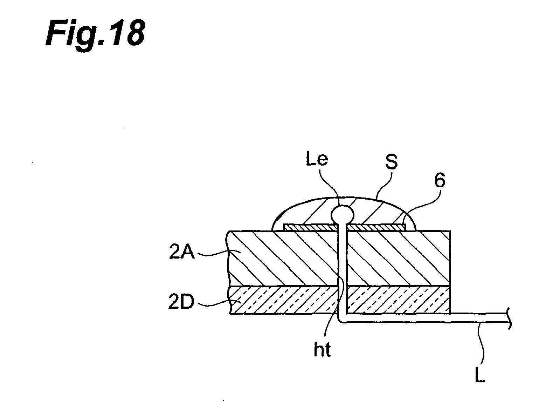

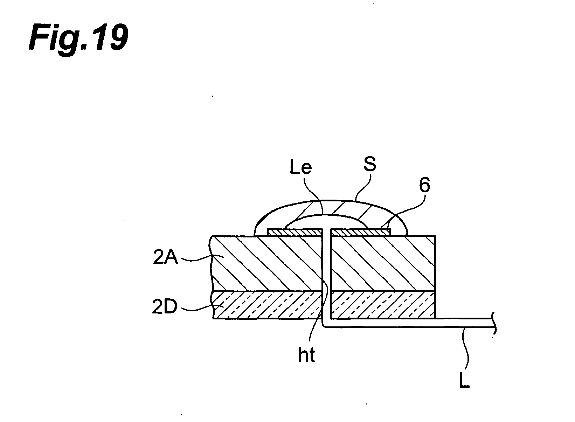

The tip of the end portion Le, as shown in Fig. 18 and Fig. 19, may be deformed by means of heat, laser, or the like so as to face one surface of the gas sensor element. That is, as shown in Fig. 18, the tip of the end portion Le may be deformed into a spherical shape, and alternately, as shown in Fig. 19, the tip of the end portion Le may be deformed in a manner of lying along the electrode pad 6. The end portion Le, as shown in Fig. 18 and Fig. 19, may be bonded to the electrode pad 6 with the bonding member S, and alternately, may be pressure-bonded to the electrode pad 6 without the bonding member S.

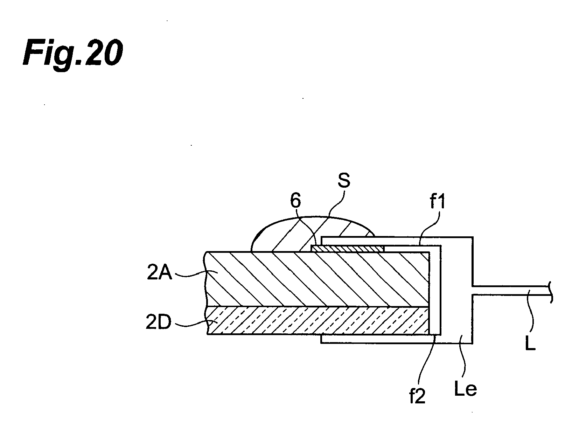

Moreover, as shown in Fig. 20 to Fig. 22, the end portion Le in the gas sensor element side of the lead L may have a grasping mechanism. Specifically, as shown in Fig. 20, the end portion Le of the lead L on the gas sensor element side may have a grasping structure having a surface f1 facing one surface of the gas sensor element and a surface f2 facing the other surface of the gas sensor element. In this configuration, the gas sensor element is put between the surface f1 and the surface f2, thereby allowing the gas sensor element to be grasped by the end portion Le of the lead L.

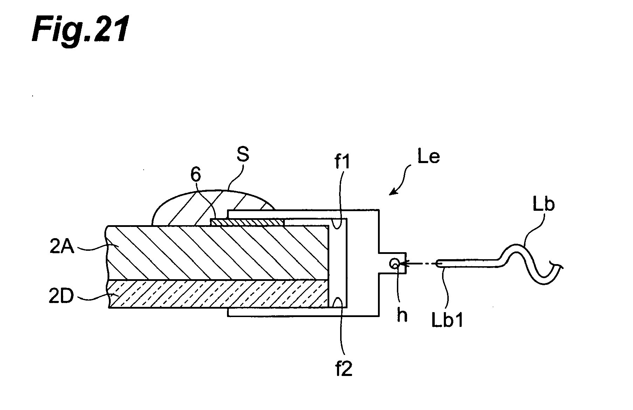

Although the end portion Le of the lead L shown in Fig. 20 is integrated into the other portion of the lead L, the end portion Le of the lead L may be configured separately from the other portion of the lead L as shown in Fig. 21,. In the configuration shown in Fig. 21, the end portion Le is provided with a hole h, and a tip Lb 1 of a bent portion Lb of the lead L is inserted into the hole h and is fixed.

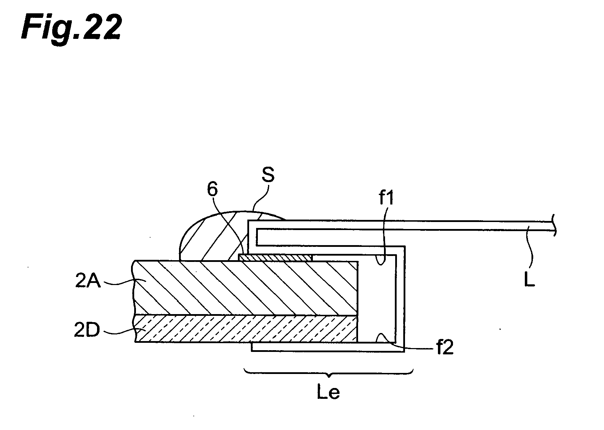

As shown in Fig. 22, the surface f1 and the surface f2 may be configured, by bending the end portion Le of the lead L plural times. In this configuration, the strength for grasping the gas sensor element is further enhanced because the end portion Le of the lead L is to be of plate-spring structure.

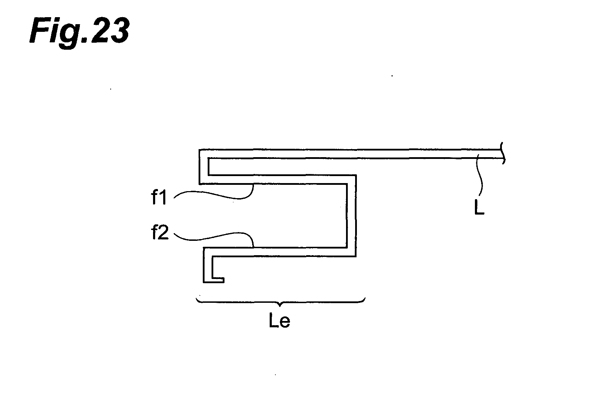

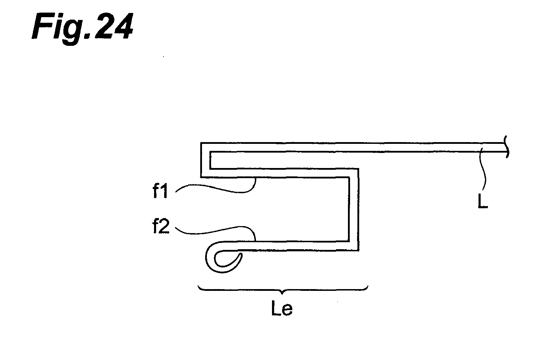

The end portion Le may be bonded to the electrode pad 6 with the bonding member S as shown in Figs. 20 - 22, and alternately, may be pressure-bonded to the electrode pad 6 without the bonding member S. A tip of the end portion Le may be bent in parallel with the surface f2 as shown in Fig. 23, and alternatively, may be bent so as to be curved toward a section of the end portion Le which forms the surface f2 as shown in Fig. 24.

In the lead shown in Fig. 4 to Fig. 14, the stopper structure of the both end portions may be omitted to configure the bent portion in the entirety of the lead, which is not shown in the figure. Alternatively, the stopper structure of the both end portions may be changed into a linear shape. Moreover, the bent portion shown in Fig. 4 and Fig. 14 and the structures of the end portions shown in Fig. 4 to Fig. 22 can be combined arbitrarily.

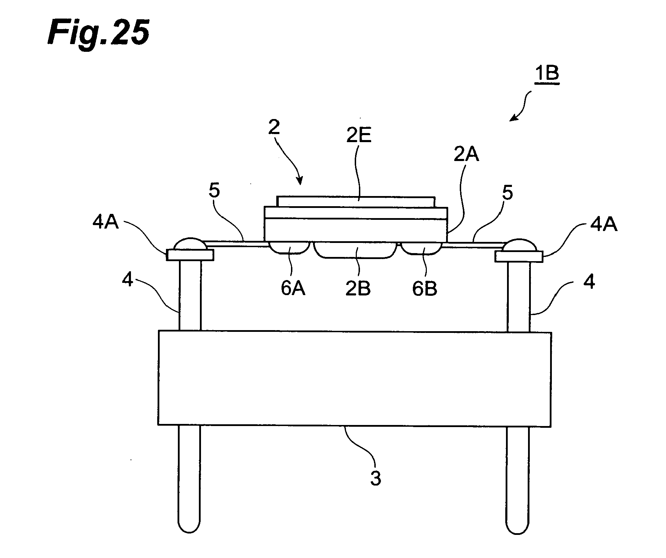

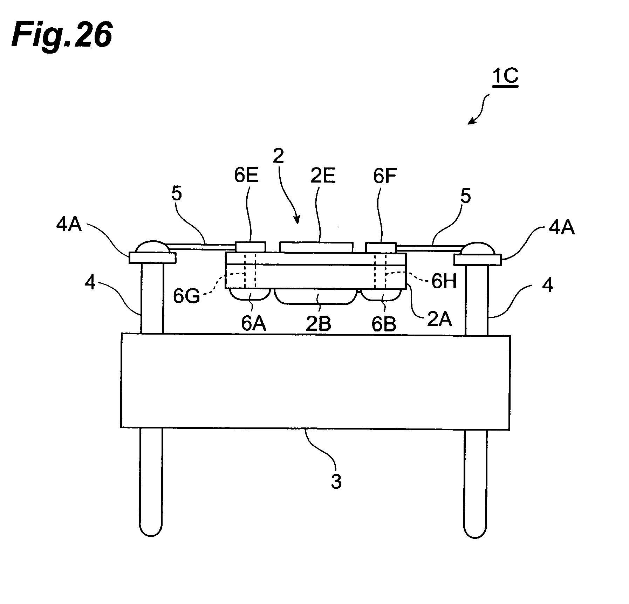

In the gas sensor 1 shown in Fig. 1, the gas sensor element 2 is provided so that the heater 2E is positioned on the side of the base plate 3 with respect to the surface of the gas sensor element 2. Instead of this, as is the case with a gas sensor 1B shown in Fig. 25 or a gas sensor 1C shown in Fig. 26, the gas sensor element 2 may be provided so that the surface of the gas sensor element 2 is positioned on the side of the base plate 3 with respect to the heater 2E. In addition, as is the case with a gas sensor 1C shown in Fig. 26, the electrode pads 6E and 6F may be provided on the back surface of the gas sensor element 2 on which the heater 2E is provided, the electrode pad 6E may be connected to the electrode pad 6A through a through-hole electrode 6G, and the electrode pad 6F may be connected to the electrode pad 6B through a through-hole electrode 6H. In the gas sensor 1C, the electrode pads 6E and 6 F is connected to the heads 4A of the stem pins 4 via lead 5 respectively.

Moreover, the gas sensor according to one embodiment of the present invention is not limited to the sensor for detecting the concentration of carbon dioxide, but can be configured as various gas sensors for detecting an inflammable gas, a hydrogen gas, a carbon monoxide gas, alcohol, etc.

Moreover, the sensor of the present invention is not limited to the gas sensor, but can be configured as various sensors such as an optical sensor, a magnetic sensor, a temperature sensor, and an acoustic sensor.

According to the sensor of the present invention, the bent portion of each lead expands/contracts due to its elasticity, thereby absorbing the load (weight) or the vibration when the load (weight) or the vibration acts upon each lead. Therefore the disconnection of each lead can be prevented in advance from occurring. That is, the disconnection of each lead can be prevented in advance from occurring in the manufacturing procedure of the sensor and in a state where the sensor is in use. Moreover, the precision of the sensor can be enhanced because the impedance generated in the bent portion of each lead allows the intrusion of the electromagnetic noise into the sensor to be suppressed.

## Claims

1. A sensor, comprising:
a base;
a plurality of pins fixed to the base;
a sensor element; and
a plurality of leads connecting the sensor element to the plurality of the pins,
wherein each of the plurality of the leads is provided along a straight line extending between a connected pin, out of the plurality of the pins, and the sensor element , and is bent plural times between the connected pin and the sensor element.

2. The sensor according to claim 1, wherein each of the plurality of the leads includes a periodically bent portion.

3. The sensor according to claim 1 or 2, wherein a width of an end portion of each of the plurality of the leads is larger than a width of a constituting member thereof, the width being a width in a direction intersecting with a direction in which the straight line extends.

4. The sensor according to claim 3, wherein the end portion of each of the plurality of the leads is bent.

5. The sensor according to claim 3, wherein a squashed portion is formed in the end portion of each of the plurality of the leads.

6. The sensor according to claim 3, wherein the end portion of each of the plurality of the leads is provided with a spherical body.

7. The sensor according to claim 1 or 2, wherein the sensor element is provided with a plurality of through-holes, and wherein an end portion of each of the plurality of the leads passes through a corresponding through-hole out of the plurality of the through-holes.

8. The sensor according to claim 7, wherein the end portion of each of the plurality of the leads passes through the corresponding through-hole out of the plurality of the through-holes so that a tip thereof protrudes on a side of one surface of the sensor element, and faces the one surface.

9. The sensor according to claim 1 or 2, wherein the sensor element has one surface and the other surface,
an end portion of each of the plurality of the leads has a first surface facing the one surface and a second surface facing the other surface, and
the sensor element is put between the first surface and the second surface.

10. The sensor according to any one of claims 1 to 9,
wherein a material of each of the plurality of the leads is a material having impedance lower than that of the sensor element.

11. The sensor according to claim 10, wherein the material of each of the plurality of the leads is any one of a precious metals and a precious metal alloys.

12. The sensor according to any one of claims 1 to 11,
wherein the sensor element is a gas sensor element for detecting a specific gas.
